# EUROPEAN PATENT APPLICATION

(11) **EP 3 438 638 A1**
(43) Date of publication of application: **06.02.2019**
(21) Application number: 17819577.2
(22) Date of filing: 23.03.2017
(51) Int. Cl.: G01N 1/28, A47J 47/16, B04B 1/02, B04B 7/02

(54) **LID STAND**

(30) Priority: 27.06.2016 JP 2016126270
(71) Applicant: SAKURA SEIKI CO., LTD., Nagano 387-0015 (JP); Sakura Finetek Japan Co., Ltd., Tokyo 103-0023 (JP)
(72) Inventor: NAGABAYASHI Tetsu, Chikuma-shi Nagano 387-0015 (JP)
(74) Representative: Mewburn Ellis LLP
(86) International application number: PCT/JP2017/011718
(87) International publication number: WO 2018/003208

(57) **Abstract**

Provided is a lid stand that can accommodate a lid of a sealed rotating container of a centrifugal smearing device in a leaned state and so that liquid dripping can be prevented, without securing a wide space on a desk, and that can similarly lower a risk of touching a liquid specimen also for both right-handed and left-handed operators. A lid stand (1) of the present invention is a lid stand against which a lid (142) fitted in a sealed rotating container (134) of a centrifugal smearing device (130) and having a flange portion (151) protruding in a radial direction in a peripheral portion (142d) and a cylindrical scattering protective wall (160) protruding to a rear surface direction is placed by leaning, wherein: a center supporting member (10) having an upper supporting portion (12) supporting a center vicinity portion (142c) of the lid (142) on both one side and the other side is disposed at a center position; and a lateral side supporting member (20) having a lower supporting portion (22) supporting the peripheral portion (142d) of the lid (142) is disposed at positions on both sides being the one side and the other side with respect to the center supporting member (10).

## Description

### Technical Field

The present invention relates to a lid stand and in more detail relates to a lid stand on which a lid of a sealed rotating container of a centrifugal smearing device is placed by leaning.

### Background Art

A centrifugal smearing device for centrifugally separating cells from a liquid sampled from a human body such as a body fluid, blood, or urine and for smearing the separated cells on a slide glass has been known, for example (see Patent Literature 1).

A centrifugal smearing device 130 described in Patent Literature 1 is illustrated in Fig. 4. This centrifugal smearing device 130 is constituted by including: a sealed rotating container 134 accommodating a chamber 170 to which a slide glass 172 can be detachably attached so that the liquid specimen is accommodated, and the cells in the liquid specimen are smeared to the slide glass by a centrifugal force; and a base 131 accommodating the sealed rotating container 134 and having a rotating driving unit 132 for rotating the sealed rotating container 134.

### Citation List

### Patent Literature

PTL 1: Japanese Patent Laid-Open No. 2014-202713

### Summary of Invention

### Technical Problem

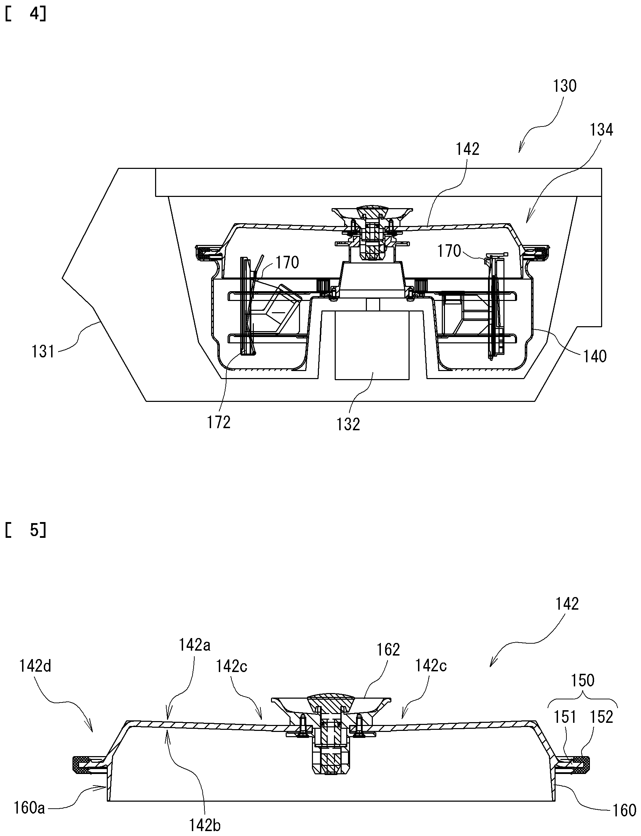

The sealed rotating container 134 in the centrifugal smearing device 130 illustrated in Fig. 4 includes: a main body 140 capable of accommodating the chamber 170; and a lid 142 closing an upper-surface opening portion of the main body 140. Here, a liquid specimen accommodated in the sealed rotating container 134 is a body fluid, urine, blood or the like of a patient in many cases, and caution is required in handling thereof since there is a possibility of infection or the like from the liquid specimen. Therefore, in order to prevent contact with the liquid specimen in an operator caused by leakage from the sealed rotating container 134, adhesion to the lid 142 or the like, as illustrated in Fig. 5, a seal portion 150 for sealing a gap between an peripheral portion of the lid 142 and an end surface of the upper-surface opening portion of the main body 140 is provided thereon and a scattering protective wall 160 protruding to a rear surface direction and shielding the seal portion 150 from inside is provided so that the liquid is not scattered to the seal portion 150.

However, conventionally, the lid removed from the sealed rotating container has been placed on a desk as it is with a handle directed downward, that is, with the rear surface to which the liquid specimen adheres directed upward in most cases. Accordingly, first, there has been a problem that a wide space for placing the lid on the desk needs to be secured. Furthermore, when the lid is placed on the desk and to be taken up from the desk, it has been likely that the operator touches the liquid specimen adhering to the rear surface of the lid. In addition, since it is difficult to grip the handle of the lid placed with the handle directed downward when it is to be taken up, it has been likely that the lid drops from the desk. Moreover, when dripping of the liquid specimen from the lid onto the desk occurs, it has also been likely that the contamination to the periphery spreads.

As described above, while the centrifugal smearing device has adopted a characteristic configuration for the lid of the sealed rotating container in order to cope with the risk of the liquid specimen in use, the device has many problems in a process of placing the removed lid on the desk as described above.

The present invention has been made in view of the aforementioned problems and aims at providing a lid stand that can accommodate a lid of a sealed rotating container of a centrifugal smearing device having a characteristic configuration in a leaned state and so that liquid dripping can be prevented, without securing a wide space on a desk, and that can similarly lower a risk of touching the liquid specimen also for both the right-handed and left-handed operators.

### Solution to Problem

As an embodiment, the aforementioned problem is solved by a solution as disclosed below.

A disclosed lid stand is a lid stand against which a lid fitted in a sealed rotating container of a centrifugal smearing device and having a flange portion protruding in a radial direction in a peripheral portion and a cylindrical scattering protective wall protruding to a rear surface direction is placed by leaning, wherein: a center supporting member having an upper supporting portion supporting a center vicinity portion of the lid on both one side and the other side is disposed at a center position; and a lateral side supporting member having a lower supporting portion supporting the peripheral portion of the lid is disposed at positions on both sides being the one side and the other side with respect to the center supporting member.

### Advantageous Effects of Invention

According to the present invention, the lid of the sealed rotating container of the centrifugal smearing device can be accommodated in a leaned state and so that liquid dripping can be prevented. As a result, a space at the time of accommodation can be also saved. Furthermore, also for both the right-handed and left-handed operators, the lid can be easily and smoothly accommodated, and the risk of coming into contact with the liquid specimen can be similarly lowered. Moreover, the lid can be reliably supported, and a fall accident or a drop accident of the lid can be prevented.

### Brief Description of Drawings

Fig. 1 is a schematic view illustrating an example of a lid stand according to an embodiment of the present invention.
Fig. 2 is a schematic view (front view) of the lid stand illustrated in Fig. 1.
Fig. 3 is a schematic view (side view) of the lid stand illustrated in Fig. 1.
Fig. 4 is a schematic view illustrating an example of a centrifugal smearing device described in Patent Literature 1.
Fig. 5 is a schematic view illustrating an example of a lid of a sealed rotating container of the centrifugal smearing device illustrated in Fig. 4.
Figs. 6A and 6B are schematic views of a state where the lid illustrated in Fig. 4 is placed by leaning against the lid stand illustrated in Fig. 1.

### Description of Embodiments

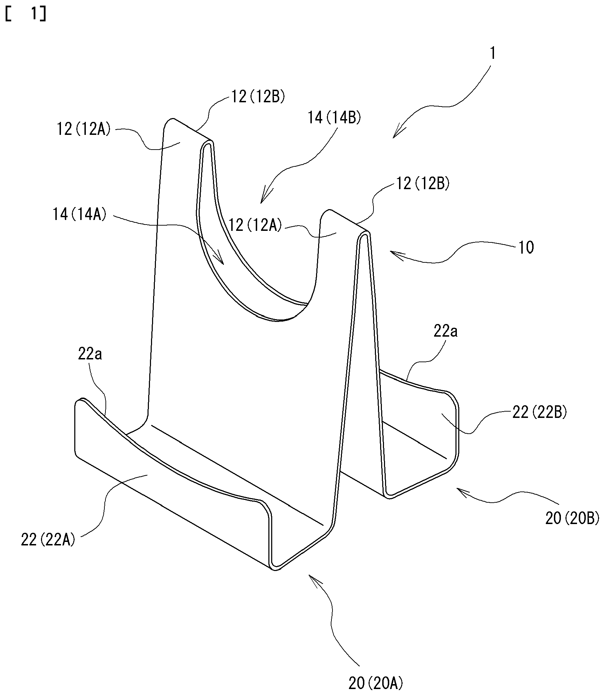

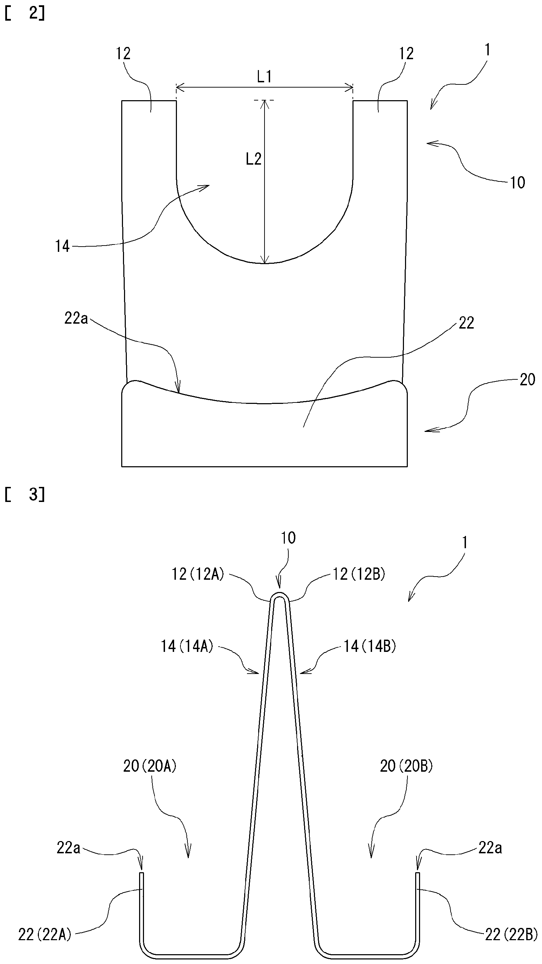

Hereinafter, an embodiment of the present invention will be described in detail with reference to the drawings. Fig. 1 is a perspective view (schematic view) illustrating an example of a lid stand 1 according to this embodiment, Fig. 2 is a front view (schematic view) thereof, and Fig. 3 is a side view (schematic view) thereof. Note that, in all the figures for explaining the embodiment, the same reference numeral is given to the members having the same function, and repeated description will be omitted in some cases.

This lid stand 1 is a lid stand against which a lid 142 detachably provided on a sealed rotating container 134 of a centrifugal smearing device 130 is placed by leaning.

As described above, the centrifugal smearing device 130 is constituted by including: the sealed rotating container 134 accommodating the chamber 170 to which the slide glass 172 can be detachably attached; and the base 131 accommodating the sealed rotating container 134 and having the rotating driving unit 132 rotating the sealed rotating container 134, and this sealed rotating container 134 is provided with: the main body 140 capable of accommodating the chamber 170; and the lid 142 closing the upper-surface opening portion of the main body 140 (see Fig. 4).

Here, the lid 142 includes a characteristic configuration for preventing the operator from touching the liquid component. Specifically, as illustrated in Fig. 5, the peripheral portion of the lid 142 is provided with the seal portion 150 for sealing a gap from the end surface of the upper-surface opening portion of the main body 140, and the inside the seal portion 150 is provided with the scattering protective wall 160 shielding the seal portion 150 from the inside by protruding to the rear surface direction so that the liquid is not scattered to the seal portion 150. As a result, the liquid component scattered from the chamber 170 during centrifugal rotation is shielded by the scattering protective wall 160 and can be prevented from leaking from the seal portion 150 to outside of the main body of the sealed rotating container 134, and thus the risk of the operator touching the liquid component can be reduced.

The seal portion 150 includes a configuration in which a packing 152 is fitted around a flange portion 151 protruding in the radial direction in a peripheral portion 142d. As a result, a sealing property with the main body 140 of the sealed rotating container 134 is enhanced, whereby an effect of preventing leakage of the liquid specimen is enhanced.

On the other hand, the scattering protective wall 160 includes a cylindrical configuration protruding to the rear surface direction and has a shape in which an axial length of the cylindrical portion is substantially similar to a length from the rear surface 142b of the lid 142 to the flange portion 151 and a thickness of the cylindrical portion becomes thinner as the scattering protective wall goes away from the rear surface 142b. Accordingly, the liquid component scattered from the chamber 170 is prevented from reaching the seal portion 150, and the effect of preventing leakage of the liquid specimen from the seal portion 150 is enhanced. Furthermore, remaining of the scattered liquid component in the distal end portion can be prevented by forming a distal end of the scattering protective wall 160 as thin as possible, and thus, when the lid 142 is opened, the liquid component can be prevented from going outside while adhering to the lid 142.

As described above, the lid stand 1 according to this embodiment includes the following characteristic configuration so that the lid 142 including various characteristic configurations to be used for the sealed rotating container 134 of the centrifugal smearing device 130 can be placed by leaning.

First, as the entire configuration, a center supporting member 10 supporting a center vicinity portion 142c of a front surface 142a in the lid 142 is provided upright at the center position and a lateral side supporting member 20 supporting a peripheral portion 142d of the lid 142 is grounded and disposed so as to support the center supporting member 10 on both one side and the other side with respect to the center supporting member 10 (20A and 20B in the figure). According to this, the peripheral portion 142d of the lid 142 is supported by the lateral side supporting member 20, and the front surface 142a (center vicinity portion 142c) of the lid 142 is supported by the center supporting member 10, whereby the lid 142 can be placed by leaning. Therefore, the problem caused by placing the lid 142 on the desk as before can be solved.

As an example, the lid stand 1 is formed by punching, bending and the like by press-processing through the use of a flat-plate shaped metal material made of stainless alloy (SUS304). Regardless of such a simple configuration, by including the configuration supporting the center supporting member 10 so as to sandwich the same by the two lateral side supporting members 20A and 20B, stability when the lid 142 is placed by leaning can be enhanced while the installation space is saved. Therefore, there can be prevented an accident in which the lid stand 1 in a state where the lid 142 is leaned falls down and thus the contaminated liquid specimen is scattered.

Here, the center supporting member 10 has an upper supporting portion 12 supporting the front surface 142a (center vicinity portion 142c) of the lid 142 on both sides being the one side and the other side (12A and 12B). With this configuration and the configuration in which the lateral side supporting members 20A and 20B are disposed at positions on both sides being the one side and the other side of the center supporting member 10, the lid 142 can be placed by leaning even if either one side or the other side of the center supporting member 10 is used. That is, the lid 142 can be placed by leaning through the use of the lateral side supporting member 20A and the upper supporting portion 12A of the center supporting member 10, whereas the lid 142 can also be placed by leaning through the use of the lateral side supporting member 20B and the upper supporting portion 12B of the center supporting member 10.

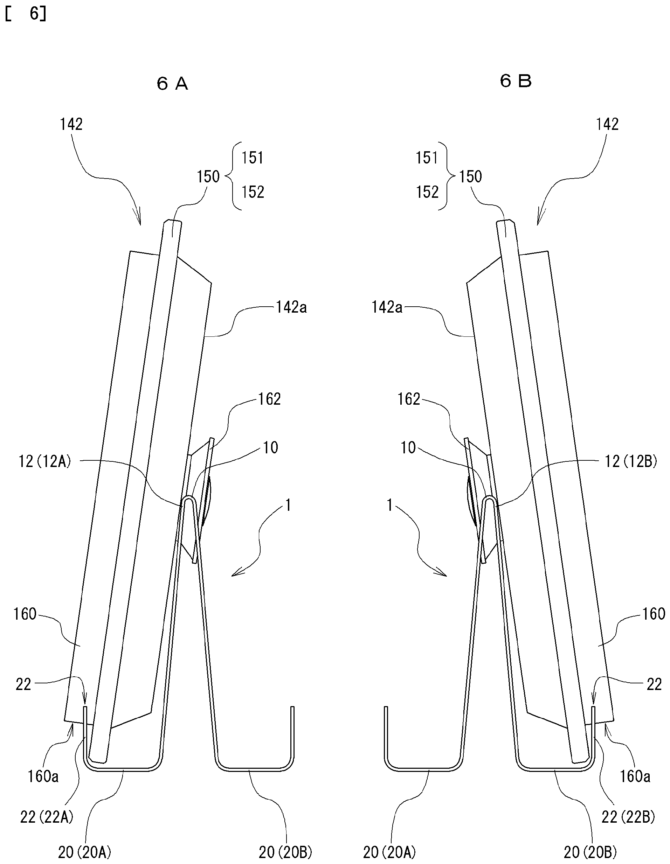

More specifically, it is explained through the use of Figs. 6A and 6B that the right-handed operator can place the lid 142 by leaning as illustrated in Fig. 6A, and the left-handed operator can place the lid 142 by leaning as illustrated in Fig. 6B, against the side surface of the lid stand 1. Therefore, also for both the right-handed and left-handed operators, each of the operators can similarly perform the work of placing the lid 142 by leaning it against the lid stand 1, and the risk of bringing the lid 142 down can be similarly lowered. That is, regardless of the right-handed operator or the left-handed operator, the risk of touching the liquid specimen can be similarly reduced.

Note that, in this embodiment, the upper supporting portion 12 (12A and 12B) of the center supporting member 10 is formed in a curved surface shape in which a metal flat-plate material is bent at a top part, at a predetermined curvature (see Fig. 3). According to this, since the contact on the curved surface becomes possible regardless of an outer diameter dimension of the lid 142, the lid can be reliably supported without damage of the front surface 142a of the lid 142.

On the other hand, the lateral side supporting members 20A and 20B are formed, in erected states, with lower supporting portions 22 (22A on 20A and 22B on 20B) supporting the peripheral portion 142d of the lid 142, respectively. According to this, as illustrated in Figs. 6A and 6B, an upper end portion 22a of the lower supporting portion 22 is advanced between the flange portion 151 and the scattering protective wall 160, whereby the scattering protective wall 160 can be supported. Furthermore, at this time, the peripheral portion 142d of the lid 142 is not shifted outward from a position where the flange portion 151 makes contact with an inner wall surface (a surface on a side corresponding to the center supporting member 10) of the lower supporting portion 22, and thus, loosing the lid 142 from the lid stand 1 is also prevented. Therefore, even in the case of the lid 142 having the characteristic configuration as described above, the peripheral portion 142d of the lid 142 (the scattering protective wall 160, here) can be reliably supported by the lower supporting portion 22 of the lateral side supporting member 20, and thus the lid 142 can be placed by leaning. Note that, in order to obtain the action, a height dimension of the upper end portion 22a of the lower supporting portion 22 is required to be formed larger than a radial dimension (here, a radial dimension in a state where the packing 152 is fitted) of the flange portion 151 of the lid 142.

Furthermore, as the characteristic configuration of this embodiment, the lower supporting portion 22 of the lateral side supporting member 20 is formed in a curved shape along an outer peripheral surface 160a of the scattering protective wall 160 in the lid 142. According to this, rolling of the lid 142 on the upper end portion 22a in a state where the outer peripheral surface 160a thereof is brought into contact with the upper end portion 22a can be prevented. Therefore, the lid 142 can be extremely stably placed on the lower supporting portion 22 (upper end portion 22a) in a stationary state at a predetermined position. For that purpose, a configuration is preferable in which a curvature of the outer peripheral surface 160a of the scattering protective wall 160 in the lid 142 is the same as a curvature of the upper end portion 22a. However, even if both the curvatures are slightly different, an effect of enhancing stability at the time of being placed can be obtained as compared with the configuration in which the upper end portion 22a is linear.

Here, since the lid 142 has a handle 162 at the center part, when a region where the upper supporting portion 12 of the center supporting member 10 is provided is formed as a mere plate surface, only the protruding handle 162 is brought into contact with the center supporting member 10, and the front surface 142a is not brought into contact with the center supporting member 10, and thus a state at the time of being placed becomes unstable. Furthermore, when the lid 142 is to be leaned against the lid stand 1 and when it is taken out, the hand of the operator is shielded by the center supporting member 10, and thus operability deteriorates, which might cause the accidents such as falling-down and dropping of the lid 142.

In coping with this problem, in this embodiment, notch holes 14 (14A and 14B) into which the handle 162 of the lid 142 is advanced are provided at a center position of the top part of the center supporting member 10, that is, in a space between the upper supporting portions 12A and 12A on the one side and a space between the upper supporting portions 12B and 12B on the other side. The notch holes 14 (14A and 14B) are formed so that each of a width dimension L1 and a depth dimension L2 is larger than the outer diameter dimension of the handle 162. According to this configuration, the operator can pass the handle 162 without the finger touching the inner peripheral portion of the notch hole 14 (14A and 14B) in a state where the operator grips the handle 162. Therefore, the operation when the lid 142 is leaned against the lid stand 1 and is taken out can be performed extremely easily and smoothly, and thus the accidents such as falling-down and dropping of the lid 142 can be prevented. Furthermore, since not the handle 162 of the lid 142 but the center vicinity portion 142c in the front surface 142a can be reliably brought into contact with the upper supporting portions 12A and 12A (or 12B and 12B) and be supported at two spots, stable support of the lid 142 becomes possible.

As described above, conventionally, when the lid of the sealed rotating container of the centrifugal smearing device was to be placed on the desk, the lid was placed as it is with the handle of the lid directed downward, that is, with the rear surface to which the liquid specimen adhered directed upward, and thus there was a problem that a wide space had to be secured on the desk. Furthermore, when the lid was placed on the desk and was taken up from the desk, it was likely that the operator would touch the liquid specimen adhering to the rear surface of the lid. In addition, since the lid placed with the handle directed downward was hard to grip by the handle when being taken up, it was likely that the lid would fall down from the desk. Moreover, in the case of the dripping of the liquid specimen onto the desk from the lid, it was also likely that contamination to the periphery would spread.

However, according to the lid stand according to the present invention, the aforementioned problems can be solved. That is, the lid of the sealed rotating container of the centrifugal smearing device can be accommodated in a leaned state and so that the liquid dripping can be prevented, without securing a wide space on the desk. In addition, also for both the right-handed and left-handed operators, the lid can be easily and smoothly accommodated. Therefore, regardless of the right-handed operator or the left-handed operator, the risk of touching the liquid specimen can be similarly lowered. Furthermore, the lid can be reliably supported, and the fall or the drop accident of the lid can be prevented.

Note that the present invention is not limited to the embodiment described above but can be changed in various ways within a range not departing from the present invention.

## Claims

1. A lid stand against which a lid fitted in a sealed rotating container of a centrifugal smearing device and having a flange portion protruding in a radial direction in a peripheral portion and a cylindrical scattering protective wall protruding to a rear surface direction is placed by leaning, wherein:
a center supporting member having an upper supporting portion supporting a center vicinity portion of the lid on both one side and the other side is disposed at a center position; and
a lateral side supporting member having a lower supporting portion supporting the peripheral portion of the lid is disposed at positions on both sides being the one side and the other side with respect to the center supporting member.

2. The lid stand according to claim 1, wherein
the lower supporting portion of the lateral side supporting member is formed in a curved surface shape along an outer peripheral surface of the scattering protective wall of the lid.

3. The lid stand according to claim 1 or 2, wherein
the upper supporting portion of the center supporting member is formed in a curved surface shape in which a metal plate material is bent at a top part.

4. The lid stand according to any one of claims 1 to 3, wherein
the upper supporting portion of the center supporting member has a notch hole into which a handle of the lid is advanced; and
the notch hole is formed so that each of a width dimension and a depth dimension is larger than an outer diameter dimension of the handle.
